(19) **Europäisches Patentamt / European Patent Office / Office européen des brevets**

(11) **EP 3 146 934 B1**

(12) **EUROPEAN PATENT SPECIFICATION**

(45) Date of publication and mention of the grant of the patent:
**11.04.2018 Bulletin 2018/15**

(51) Int Cl.:
***A61C 7/16*** (2006.01)

(21) Application number: **16190488.3**

(22) Date of filing: **23.09.2016**

(54) **PADS FOR ORTHODONTIC BRACKETS, ORTHODONTIC BRACKETS, AND METHODS OF MAKING ORTHODONTIC BRACKETS**

PADS FÜR ORTHODONTISCHE KLAMMERN, ORTHODONTISCHE KLAMMERN UND VERFAHREN ZUR HERSTELLUNG ORTHODONTISCHER KLAMMERN

TAMPONS POUR BOITIERS ORTHODONTIQUES ET BOITIERS ORTHODONTIQUES ET PROCÉDÉS DE FABRICATION DE BOITIERS ORTHODONTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2015 US 201562232079 P**

(43) Date of publication of application:
**29.03.2017 Bulletin 2017/13**

(73) Proprietor: **Ormco Corporation Orange, CA 92867 (US)**

(72) Inventors:
• **ALAUDDIN, Sammel, Shahrier Rancho Cucamonga, CA 91730 (US)**
• **WONG, Raymond, F Chino Hills, CA 91709 (US)**

(74) Representative: **Findlay, Alice Rosemary Reddie & Grose LLP The White Chapel Building 10 Whitechapel High Street London E1 8QS (GB)**

(56) References cited:
WO-A1-2014/119089   WO-A2-03/026526
CA-A- 1 219 476   US-A- 4 165 561

## Description

TECHNICAL FIELD

The present invention relates to orthodontic appliances for use in dental applications and, in particular, to pads for use with orthodontic brackets, orthodontic brackets having pads, and methods of making pads and orthodontic brackets.

BACKGROUND

Millions of dollars are spent each year to align teeth and/or correct malocclusions. In the field of orthodontics, techniques to correct such problems include attaching orthodontic appliances to the patient's teeth to straighten or correct their alignment relative to one other and to the patient's skeletal structure. To this end, orthodontic appliances, such as brackets, buccal tubes, and the like, are attached to the surfaces of the teeth to transmit corrective forces from an orthodontic archwire or other elastic devices to the teeth.

Of the available orthodontic appliances, clinicians often use orthodontic brackets to correct malocclusions. Typical orthodontic brackets may include a bracket body in which an archwire slot is provided to receive an archwire and may also include tie wings or other ligating structures integral with or secured to the bracket body for use in ligating the archwire to the bracket. Such bracket structure is generally provided with a tooth engaging structure with which the bracket is secured to the tooth surface.

Orthodontic appliances are typically secured to the patient's teeth with an adhesive. The adhesive is generally applied to a tooth, with the orthodontic appliance then being pressed onto the adhesive. Once cured, the adhesive creates a chemical and/or mechanical bond between the adhesive and the tooth and a chemical and/or mechanical bond with structure on the bracket. In a similar fashion, each of a plurality of orthodontic brackets is adhered to a tooth. The brackets may then be coupled together by an archwire to begin treatment.

In this regard, the tooth engaging structure on the bracket often includes a pad that may be either integrally formed with the bracket body or is formed as a separate sheet and then secured to the bracket body. The pad may define a bonding surface and may include specific features to facilitate an adhesive bond to the patient's tooth.

For instance, the bonding surface often includes structural elements, such as a mesh or other highly textured structure that includes undercuts, protrusions, or recesses or a combination of these features. The adhesive may flow in and around these features during affixation of the bracket to the tooth. Once the adhesive hardens or cures, the adhesive provides a mechanical or interlocking bond between the pad and the tooth. Such a bonding surface may be referred to as a "mechanical bonding base."

In use, orthodontic brackets are subjected to a variety of forces in addition to forces exerted on brackets by archwires. More particularly, when objects, such as food, forcibly contact orthodontic brackets during chewing, the forces are conveyed by the bracket directly to the adhesive bond securing the bracket to the tooth. When the force exceeds the strength of the bond, the bond may fail catastrophically and the bracket may debond from the tooth. Often it is normal mastication that generates forces that debond the brackets from a patient's tooth.

A substantial percentage of brackets debond during treatment. Some studies show that the debond rate may be as high as 10%. With approximately two million orthodontic treatments being started each year in the United States, with each using typically twenty brackets per case, and with treatment lasting on the average about two years, a substantial number of failures (approximately forty million) may be expected to occur each year. Each orthodontist may therefore expect, on average, about four hundred bracket debonds per year. At a cost of $75 per debond, the lost time and money may be about $30,000 per year. Accordingly, bracket debond is a major loss of revenue for the orthodontist.

To address debonding, there have been attempts at toughening the bond between the appliance and the tooth. For example, uniform size particles have been used to provide a larger contact surface for bonding to the adhesive to generate a better bond. Wire meshes between the base portion of the bracket and points of attachment on the tooth have been developed. The wire mesh has a plurality of openings through which the adhesive passes to allow for a more reliable mechanical bond between the adhesive and the mesh. Still other structures include foils or plates having a photoetched surface, and a layer of mesh material diffusion bonded to the photoetched surface. The photoetched surface provides a secondary bond interlock, while the mesh provides a primary bond interlock, thereby increasing the strength of the bond between the bonding pad attached to a bracket and the tooth.

While prior art orthodontic appliances have improved bonding, such improvements are not without drawbacks. Strengthening the bond can have deleterious effects. With a stronger bond between the bracket and the tooth, the adhesive-interface may be significantly stronger. Debonding the bracket may tear a portion of the enamel from the tooth. As a result, a strong bond may make it difficult for a clinician to remove a bracket without damaging the tooth. Torn enamel not only causes pain to the patient, but also requires a repair which is both inconvenient and costly.

Consequently, there have also been attempts to develop orthodontic appliances designed to eliminate tooth enamel damage during debonding. This includes a flexible bonding pad or base for an orthodontic ceramic bracket. With this pad or base, the clinician applies a force, (i.e., with dental pliers) that buckles or flexes the pad and breaks the bond between the base and the adhesive. Removal of the bracket is therefore accomplished at forces substantially below forces sufficient to fracture the bracket or tear tooth enamel.

While there have been attempts to address debonding of brackets while eliminating damage to the patient's teeth there remains a need to provide a bonding pad, an orthodontic bracket, or other appliance for attachment to a tooth that does not debond during normal mastication but may be intentionally debonded without damaging the patient's teeth. CA 1 219 476 A1 discloses a pad for an orthodontic bracket.

SUMMARY OF INVENTION

The present invention overcomes the foregoing and other shortcomings and drawbacks of orthodontic brackets heretofore known for use in orthodontic treatment. While the invention will be described in connection with certain embodiments, it will be understood that the invention is not limited to these embodiments. On the contrary, the invention includes all alternatives, modifications and equivalents as may be included within the scope of the present invention. In accordance with the principles of the present invention, a pad is provided for use with an orthodontic bracket that includes a porous superelastic metal structure. The porous superelastic metal structure is configured to receive an adhesive for bonding the orthodontic bracket to a tooth.

Optionally, the porous superelastic metal structure is a wafer and is impregnated with the adhesive prior to bonding the orthodontic bracket to the tooth.

Optionally, the orthodontic bracket includes a bracket body and the porous superelastic metal structure forms a bonding portion that is coupled to the bracket body and that defines a bonding surface. The bonding surface receives the adhesive.

Optionally, the porous superelastic metal structure defines a pore volume that is substantially uniformly distributed through the thickness of the bonding portion.

Optionally, the porous superelastic metal structure defines a pore volume in which a volume fraction of porosity at a location proximate the bracket body is different from a volume fraction of porosity at a location proximate the bonding surface.

Optionally, the pad further includes an attachment portion for attaching the bonding portion to the bracket body. The attachment portion is substantially solid. Optionally, the attachment portion is made of a metal that is different from the metal of the porous superelastic metal structure. Optionally, the attachment portion is made of a metal that differs from the metal of the bracket body.

Optionally, the bracket body and the porous superelastic metal structure are integrally formed.

According to one aspect of the present invention, in one embodiment, an orthodontic bracket includes a bracket body, and a pad extending from the bracket body and including a porous superelastic metal wafer. The wafer is impregnated with the adhesive prior to bonding the orthodontic bracket to the tooth.

Optionally, the bracket body and the pad are integrally formed.

Optionally, the porous superelastic metal structure forms a bonding portion that is coupled to the bracket body and defines a bonding surface that is configured to receive the adhesive.

Optionally, the pad further includes an attachment portion for attaching the bonding portion to the bracket body. The attachment portion is substantially solid.

According to one aspect of the present invention, a method for making a pad for an orthodontic bracket includes fabricating a porous superelastic metal structure for placement between the orthodontic bracket and a tooth. The porous superelastic metal structure is configured to receive an adhesive for bonding the porous superelastic metal structure to the tooth.

Optionally, the orthodontic bracket includes a bracket body and the porous superelastic metal structure forms a bonding portion. The method further includes fabricating an attachment portion that is to be coupled to the body portion and to the bracket body.

Optionally, fabricating the attachment portion includes closing off porosity on one side of the bonding portion by spraying molten metal or tack welding a sheet of metal to one side of the bonding portion.

Optionally, fabricating the porous superelastic metal structure includes producing a gradient in a volume fraction of porosity in the porous superelastic metal structure with the highest volume fraction of porosity at one surface.

Optionally, fabricating the porous superelastic metal structure includes mixing a nickel-containing powder and a titanium-containing powder, pressing the mixture to form a green body, and igniting a reaction between the nickel-containing powder and the titanium-containing powder in the green body.

Optionally, fabricating the porous superelastic metal structure includes mixing a powder of a superelastic metal and a powder of a polymeric binder, placing the mixture in a polymeric precursor foam, and sintering the superelastic metal particles.

Optionally, fabricating the porous superelastic metal structure includes vapor depositing a superelastic metal on a prefabricated carbon skeleton.

Optionally, fabricating the porous superelastic metal structure includes melting a composition from which the superelastic metal forms upon cooling, mixing a filler material in the melt, pouring the mixture of melted metal and filler into a mold, cooling the mixture, and removing the filler.

BRIEF DESCRIPTION OF THE DRAWINGS

The accompanying drawings, which are incorporated in and constitute a part of this specification, illustrate embodiments of the invention and together with the brief description given above and the detailed description given below, serve to explain various aspects of the invention.

Fig. 1 is a perspective view of a dental assembly according to one embodiment of the invention.

Fig. 2 is a cross-sectional view of the dental assembly of Fig. 1.

Fig. 2A is an exemplary Scanning Electron Microscope (SEM) micrograph of a porous superelastic metal structure according to embodiments of the invention.

Fig. 2B is photograph of a porous superelastic metal structure according to embodiments of the invention.

Fig. 3 is a perspective view of a dental assembly according to one embodiment of the invention.

Fig. 4 is a cross-sectional view of one embodiment of the dental assembly.

Fig. 5 is a perspective view of a dental assembly according to one embodiment of the invention.

Figs. 6A and 6B are schematic cross-sectional views of one embodiment of the invention prior to and following placement, respectively, of the dental assembly on a tooth.

Figs. 7A, 7B, 7C, and 7D are photographs of a bracket according to an exemplary embodiment of the invention.

DETAILED DESCRIPTION

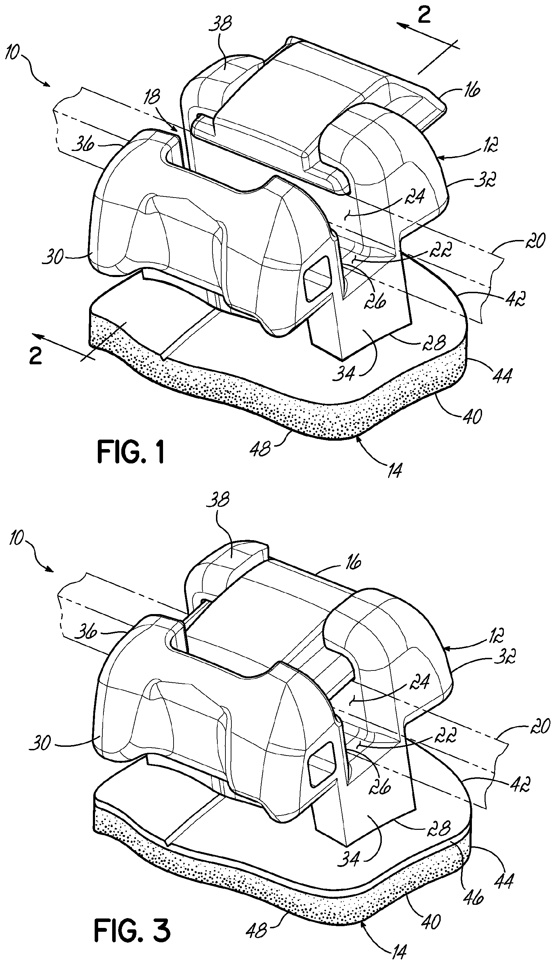

With reference now generally to Figs. 1-4 and to Fig. 1 in particular, embodiments of the present invention include an orthodontic appliance, such as an orthodontic bracket 10 for attachment to a tooth (not shown). As shown, the orthodontic bracket 10 includes a bracket body 12 and a pad 14. The bracket body 12 may be secured to the pad 14 or may be formed integrally with the pad 14, as is described below. The pad 14 includes a body that is at least partially made of a porous structure, for example a porous superelastic metal structure. The porosity is open and is thus connected to an outer surface of the pad 14. In this regard, when the orthodontic bracket 10 is secured to a tooth with an adhesive, the adhesive may penetrate into the pores. Once the adhesive cures, a mechanical interlocking bond between the bracket body 12 and the tooth is formed. The bracket body 12 is spaced apart from the tooth by a porous superelastic metal structure. In this configuration, the orthodontic bracket 10 may resist unintentional debonding from the patient's tooth because the superelastic metal of the pad 14 may absorb shear forces and shock associated with normal mastication and other less frequent, but more severe impacts that occasionally occur during treatment.

These events may include impact forces, such as from sporting events or other accidental impact to the bracket body 12.

As is known, superelastic metals exhibit large elastic deformation (and recovery) when subjected to a threshold loading. This deformation absorbs energy. The layer of superelastic metal, even though at least partially porous, will absorb more energy from impact and other forces occasionally experienced during orthodontic treatment. Energy absorption in or around the pad 14 reduces the likelihood that forces on the bracket body 12 are transferred directly to the adhesive bond between the tooth (not shown) and the bracket 10. The bracket 10 is thus less likely to be broken loose from the tooth. By way of example, NiTi may act as a shock absorber. More specifically, NiTi may elastically strain near 6 to 8%. Thus, a pad of NiTi may deform significantly before the bond between the pad 14 and the tooth surface is significantly stressed by the external force.

Further, the strength of the bond between the orthodontic bracket 10 and the tooth may be in the range in which when the clinician intentionally debonds the orthodontic bracket 10 at the end of treatment, the patient's teeth are not damaged. Advantageously, dental assemblies according to the present invention may show improved bond strength.

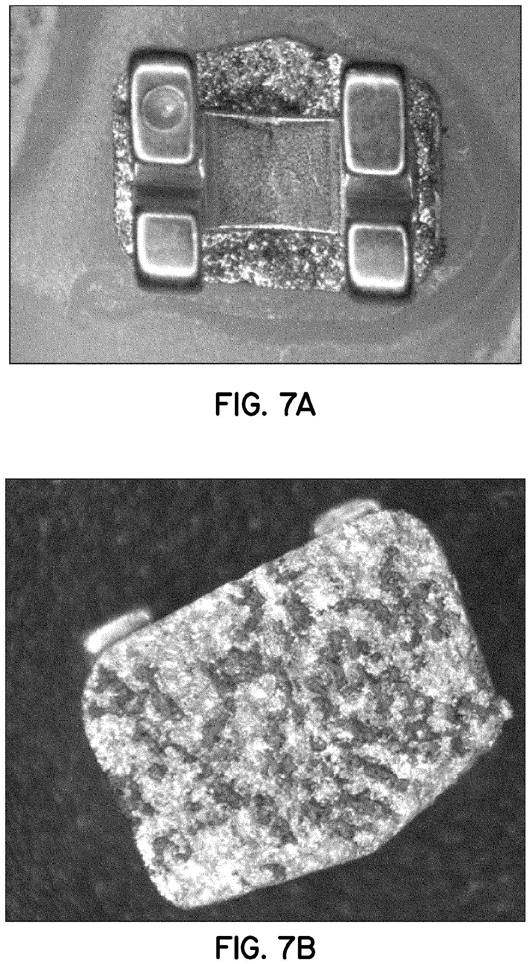

To these and other ends and with reference to Fig. 1, in which a self-ligating orthodontic bracket is shown, the orthodontic bracket 10 includes a movable closure member coupled to the bracket body 12. In one embodiment, the movable closure member may include a ligating slide 16 slidably coupled with the bracket body 12. The bracket body 12 includes an archwire slot 18 formed therein adapted to receive an archwire 20 (shown in phantom) for applying corrective forces to the teeth. The ligating slide 16 is movable between an opened position (Fig. 1) in which the archwire 20 is insertable into the archwire slot 18 and a closed position (Fig. 3) in which the archwire 20 is retained within the archwire slot 18. The bracket body 12 and the ligating slide 16 collectively form the orthodontic bracket 10 for use in corrective orthodontic treatments. Moreover, while the movable closure member is described herein as a ligating slide, the invention is not so limited. The movable closure member may include other movable structures (e.g., latch, spring clip, door, etc.) that are capable of moving between an opened and closed position. It will also be appreciated that embodiments of the present invention are not limited to self-ligating orthodontic brackets. By way of example only, orthodontic brackets, bands, buccal tubes, anchors, caps or other hardware may be attached to a tooth. Orthodontic brackets may include those described in U.S. Pat. No. 8,585,398 and in U.S. Patent Publication No. 2014/00272758, the disclosures of which are hereby incorporated by reference herein in their entireties. By way of additional example, twin tie-wing style orthodontic brackets (e.g., shown in Figs. 7A-7D) are known that may be adhesively secured to a tooth.

With continued reference to Figs. 1-3, the archwire slot 18 may include a base surface 22 and a pair of opposed slot surfaces 24, 26 projecting outwardly from the base surface 22 that collectively define the archwire slot 18 extending in a mesial-distal direction. As is known, the archwire slot 18 may be designed to receive an orthodontic archwire 20 in any suitable manner. Although not shown, twin tie wing style brackets also include an archwire slot but rely on a separate ligature, such as, an elastomeric O-ring or wire, to secure the archwire within the archwire slot.

The orthodontic bracket 10, unless otherwise indicated, is described herein using a reference frame attached to a labial surface of an anterior tooth on the lower jaw. Consequently, as used herein, terms such as labial, lingual, mesial, distal, occlusal, and gingival used to describe bracket 10 are relative to the chosen reference frame. The embodiments of the invention, however, are not limited to the chosen reference frame and descriptive terms, as the orthodontic bracket 10 may be used on other teeth and in other orientations within the oral cavity. For example, the bracket 10 may also be coupled to the lingual surface of the tooth and be within the scope of the invention. Those of ordinary skill in the art will recognize that the descriptive terms used herein may not directly apply when there is a change in reference frame. Nevertheless, embodiments of the invention are intended to be independent of location and orientation within the oral cavity and the relative terms used to describe embodiments of the orthodontic bracket are to merely provide a clear description of the embodiments in the drawings. As such, the relative terms labial, lingual, mesial, distal, occlusal, and gingival are in no way limiting the invention to a particular location or orientation.

When mounted to the labial surface of a tooth (not shown) carried on the patient's lower jaw and with reference specifically to Fig. 1, the bracket body 12 has a lingual side 28, an occlusal side 30, a gingival side 32, a mesial side 34, a distal side 36, and a labial side 38. The bracket body 12 is configured to be secured to the tooth by an appropriate orthodontic cement or adhesive.

In one embodiment shown in Figs. 1-3, the lingual side 28 is provided with the pad 14 defining a body or bonding base that is configured to be secured to the surface of the tooth. The pad 14 may be coupled to the bracket body 12 as a separate piece or element or, alternatively, the pad 14 may be integrally formed with the bracket body 12, each of which is described below. Further, the pad 14 may be specifically shaped to fit on the surface of the patient's tooth. In that regard, the pad 14 may be customized in shape and in curvature and may therefore have a multitude of configurations different from that shown in Figs. 1-3. In that regard, it will be appreciated that embodiments of the present invention are not limited to any particular shape of the pad 14.

The pad 14 has a bonding surface 40 that may be contoured to match the surface of the tooth and may define a peripheral surface or edge 42 that defines a bonding area. As is described below, in embodiments of the invention, at least a portion of the bonding surface 40 is defined by a bonding portion 44 that includes a porous superelastic metal structure having open pores that penetrate into the pad 14. Thus, when the orthodontic bracket 10 is adhesively secured to a tooth, the adhesive may cover the bonding area and extend beyond the edge 42 while penetrating into the pores of the porous superelastic metal structure. That is, the adhesive penetrates into the bonding portion 44. Once cured, the adhesive provides a mechanical interlock between the orthodontic bracket 10 and the tooth.

Further in this regard, the porosity extends into the pad 14 and may be referred to as apparent porosity in which the pores are open to the bonding surface 40 and so fluids, such as, an adhesive, may penetrate into the pores. Apparent porosity may be referred to as open porosity. By contrast, embodiments of the present invention may exclude closed porosity in which pores are closed off from, or not connected to, a surface though limited amounts of closed porosity may be tolerated. The porous structure may comprise a solid volume of superelastic metal with pores defining an open volume in the pad 14. It will be appreciated that the open porosity may be in any form but may include individual pockets that are isolated from one another by regions of metal. The pockets may not be isolated but may interconnect to form networks of channels within the pad 14. The porosity may be a combination of interconnected channels and isolated pores or pockets.

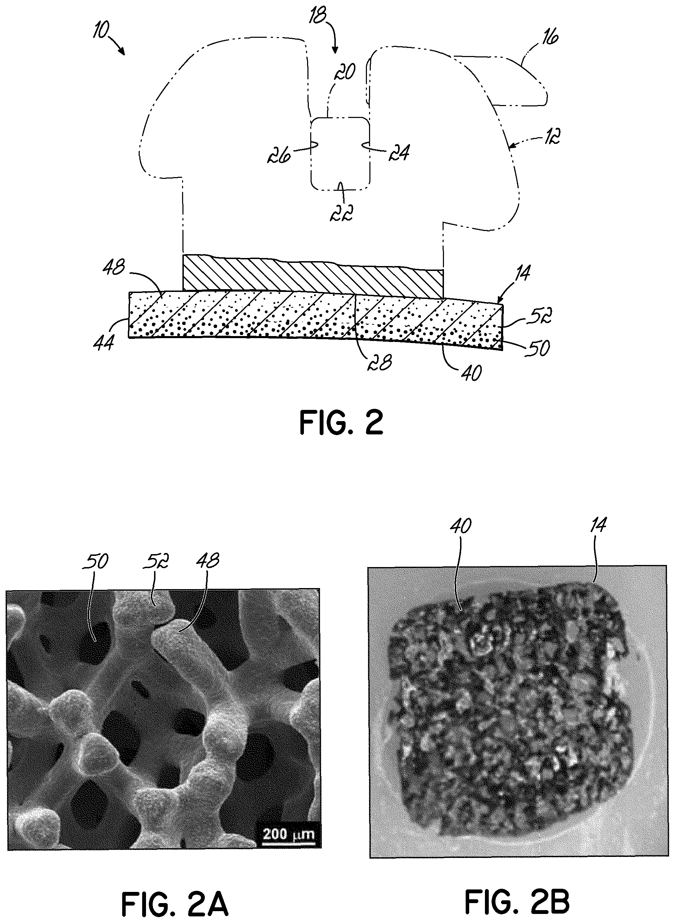

With reference to Figs. 2 and 2A, in one embodiment, the pad 14 includes a porous superelastic metal structure 48 having a solid volume 52 of the superelastic metal. As shown, the porous structure 48 includes a three-dimensional framework of superelastic metal (i.e., the solid volume 52) that defines a pore volume 50. As is best shown in Figs. 2A and 2B, individual pores of the pore volume 50 are open to the bonding surface 40 and so are capable of receiving fluids, such as adhesives. The solid volume 52 may be randomly constructed and so differs from a patterned machined mesh or molded grid. The characteristics of the solid volume 52 to the pore volume 50 may vary.

In one embodiment, the pore volume 50 fraction may be constant throughout the pad 14. In this regard, the bonding portion 44 may include an evenly distributed ratio of solid volume 52 to pore volume 50 through the thickness of the pad 14. Other distributions and ratios are possible. For example, the pore volume 50 may not be evenly distributed through the porous structure 48. In one specific example, the pore volume 50 may be highest at regions proximate the bonding surface 40 and may then decrease in a direction toward the bracket body 12. In another example, the bonding portion 44 may include more than one layer of material. A layer of solid superelastic metal may be coupled to a porous layer of superelastic metal. In this way, the bonding portion 44 includes two discrete layers of metal that are bonded together. In this embodiment, there may be a boundary between the solid metal and the porous metal. This two-layered body may then be coupled to the bracket body 12 with the porous layer defining the bonding surface 40.

Rather than two discrete layers, in one embodiment and with reference to Fig. 2, the pore volume 50 varies continuously through the thickness of the bonding portion 44. The pore volume 50 to solid volume 52 of the porous structure 48 may vary from nearly 100% solid (no porosity) adjacent the lingual side 28 of the bracket body 12 to a ratio of less than 100% solid (balance of pore volume) adjacent the bonding surface 40. This distribution may be the result of a gradient in the solid volume 52 starting at 100% solid at or near the lingual side 28 of the bracket body 12 and changing to a larger portion of pore volume 50 at the bonding surface 40. This may include a distribution in which the largest volume fraction of porosity is at or near the bonding surface 40 with the volume fraction of porosity being reduced at distances in the bonding portion 44 furthest from the bonding surface 40. The gradient may be linear with thickness of the bonding portion 44 or be a nonlinear function of thickness of the bonding portion 44. A gradient in porosity may be advantageous when, for example, the pad 14 is being bonded to the bracket body 12. In this regard, a less porous surface of the bonding portion 44 of the pad 14 may improve the mechanical integrity of the interface between the bracket body 12 and the pad 14. A gradient in porosity is shown best in Fig. 2.

Exemplary microstructures, including porosity, for the pad 14 are shown in Figs. 2A and 2B. By way of example, the porosity may mimic natural porosity found in the enamel of teeth. Pores in enamel may be generally defined by rods that are about 4 $\mu$m to about 8 $\mu$m in diameter and are oriented generally perpendicularly to the underlying dentin. A rod sheath may surround each rod and together with interrod enamel may define the natural porosity found in enamel. In this regard, the porous superelastic metal structure may be characterized with a similar rod and pore structure and have a similar orientation and extend to a similar depth as the natural porosity in enamel.

In an exemplary embodiment, individual pores of the pore volume 50 may have similar pore diameters as the pores of tooth enamel. By way of example and without limitation, the pore diameter may be about 5 $\mu$m. Moreover, the depth of the pore volume 50 from the bonding surface 40 may vary. In one embodiment, the pore volume 50 may extend to a depth of a few tens of microns up to a depth of about 250 $\mu$m. In view of the similarity between the porosity found in enamel and the porosity formed in the superelastic metal pad, it is believed that the bond strength with an appropriate adhesive will be around 40 MPa.

Furthermore, individual pores of the pore volume 50 may be generally aligned with each other. In an exemplary embodiment, the pores may generally be at a right angle to the tooth surface. In one embodiment, the pores may be generally aligned at a 45 degree angle to the tooth surface. This anisotropy in the microstructure may produce different degrees of performance (e.g., elastic modulus) in different directions to address debonding force.

As is described above, the pad 14 is at least partially made of a superelastic metal. By way of example only, not limitation, the superelastic metal may be a nickel-titanium (NiTi) based alloy, a copper-aluminum-manganese (CuAlMn) alloy, a copper-aluminum-beryllium (CuAlBe) alloy, or a copper-aluminum-nickel (CuAlNi) alloy, among others. As is described below, the superelastic metal may be fabricated to have anisotropic properties, particularly with regard to the distribution of the porosity.

In one embodiment, and with reference to Fig. 1, the entirety of the pad 14 may be porous and so functions as the bonding portion 44. In this embodiment, the pad 14 is coupled directly to the bracket body 12. The pad 14 may be secured to the bracket body 12 such as by welding or with an adhesive.

As one alternative, and with reference to Fig. 3, in one embodiment, the pad 14 may include an assembly of an attachment portion 46 coupled to the bonding portion 44. Similar to the embodiment shown in Fig. 1, the bonding portion 44 defines the bonding surface 40 for bonding the orthodontic bracket 10 to the tooth with adhesive. The attachment portion 46 may facilitate attachment of the bonding portion 44 to the bracket body 12. Without being bound by theory, joining of dissimilar metals can sometimes be problematic. As such, bonding a non-superelastic metallic bracket body, for example, made from stainless steel, to superelastic metal may be facilitated by the attachment portion 46 made of a different metal. To that end, the attachment portion 46 is positioned between the bracket body 12 and the bonding portion 44. In this way, the attachment portion 46 may be a layer of a metal that differs from the bonding portion 44 though it may form a portion of the pad 14, as shown. With continued reference to Fig. 3, in one embodiment, the bonding portion 44 may be a superelastic metal mesh. The attachment portion 46 may be solid superelastic metal or a different metal to facilitate attachment of the bonding portion 44 to the bracket body 12.

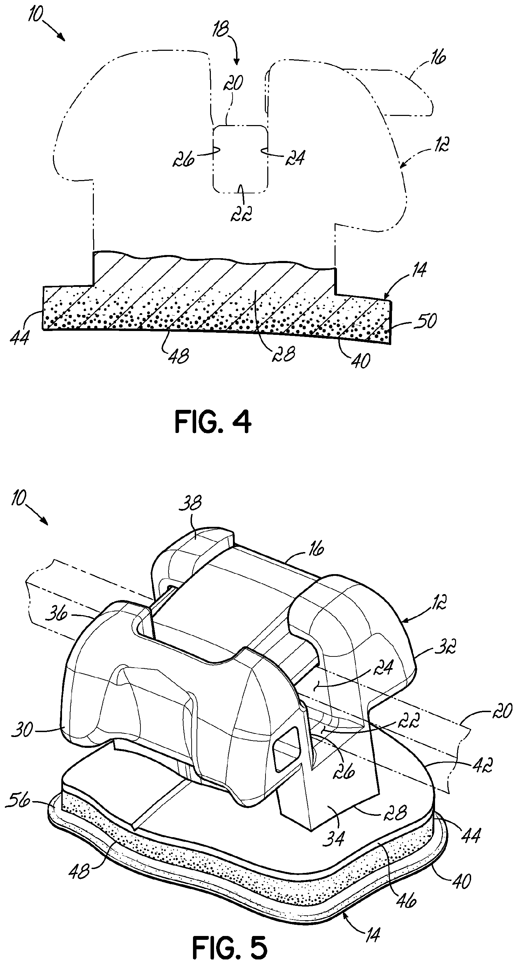

In one embodiment, and with reference to Fig. 4, the bracket body 12 and the pad 14 may be integrally formed. That is, the body 12 and the pad 14 are formed of a single superelastic metallic body with open porosity (i.e., a volume of porosity) at the bonding surface 40, similar to embodiments described above and shown in Figs. 1 and 3.

In one embodiment, the pad 14 may be fabricated using the self-propagating high temperature synthesis process, also known as combustion synthesis. This process utilizes high reaction temperatures (e.g., 1200 °C) and short processing times (e.g., seconds to minutes) resulting in homogeneous alloys of desirable stoichiometry. In an exemplary embodiment in which superelastic metal is formed, fine, high-purity powders of nickel and titanium (for superelastic NiTi) may be mixed in an inert atmosphere at a low pre-heat temperature (e.g., 300 °C to 400 °C) and pressure (e.g., up to 200 MPa) to form a green (i.e., unsintered or unreacted) compact. The green compact may then be sintered by ignition of a self-propagating combustion reaction to produce a solid. A specified maximum pre-heat temperature may be chosen to initiate this reaction, which is highly exothermic.

By this process, the compact is ignited at one end. The reaction proceeds directionally toward the other end to form a solid. By way of example, the reaction equation for NiTi may be shown by Equation 1:

$$Ni + Ti \rightarrow NiTi + 67 \text{ kJ/mol}$$

This reaction may be controlled by, for example, salts or reaction stoichiometry and may result in porous superelastic metal having a desired shape, such as the shape of the pad 14 or, alternatively, the bracket body 12. The pad 14 may include a solid volume of superelastic metal having an interconnected porosity of about 45% to about 65%. The percentage of porosity may depend on factors including compaction pressure and particle size distributions, to name only a few. The porosity may be in the form of isolated pockets or interconnected pockets that form channels. The pockets or channels may have cross sectional dimensions that measure up to 0.5 mm.

In an alternative embodiment, porous superelastic metal may be fabricated using hot isostatic pressing. In this process, for example, elemental powders of Ni and Ti may be pressurized at or near the melt temperatures (e.g., about 1310 °C), which drives the reaction and solidification of the alloy. The atmosphere is controlled due to the combination of high temperature and pressure used in the reaction. The pressure determines the degree of porosity in the pad. As with the embodiment involving combustion synthesis, this reaction may be controlled such that the resultant porous NiTi body has a desired shape.

In an alternative embodiment, superelastic powder may be fused and shaped into a porous body using spark plasma sintering. This process relies upon compression and electrical energy to sinter metallic particles into a solid body. In this regard, a pulsed current is induced through a die (e.g., made of graphite) to heat and drive necking (i.e., sintering) between particles. The quantity and type of porosity may be controlled by the temperature and pressure. In this regard, lower temperatures and pressures may result in increased porosity.

In another exemplary embodiment, a "burn out" process may be used to sinter superelastic metal powder into a porous body with a desired shape. For example, a mixture of NiTi powder and polymeric binder may be poured into a polymeric precursor foam. This loaded foam may then be heated to vaporize the binder and foam and to begin sintering the NiTi powder. The porosity may be generally controlled by the characteristics of the precursor foam. In an exemplary embodiment, the polymeric precursor foam may be shaped to create a porosity gradient (described above) in the pad 14.

Other methods of making porous superelastic metal include various deposition techniques. In one embodiment, for example, a porous NiTi body may be fabricated by depositing NiTi via chemical vapor deposition (CVD) or chemical vapor infiltration (CVI) on a prefabricated carbon skeleton. The carbon skeleton does not form a portion of the porous body. Instead, it is mechanically or chemically removed to leave the deposited NiTi body. In an exemplary embodiment, NiTi vapor may be deposited on a prefabricated carbon skeleton shaped to create a gradient in the porosity.

Other techniques may include traditional casting techniques involving pouring a melt of the superelastic metal over salt in a mold, which is later digested chemically, or by introducing gas to the poured melt to form porosity. In these exemplary embodiments, the porosity may be controlled based on the amount of gas or salt introduced.

In one embodiment, the pad 14 may have a uniform porosity through its thickness. A subsequent thermal spray process may be used to create a gradient in the porosity by capping open pores on one surface. For example, a porous body may be plasma sprayed with another metal (e.g., 316 stainless steel) on one side. The molten or liquid metal droplets fill in or cap a portion of the pore volume 50. Capping or filling in the pores on one surface may create a gradient in the pore volume 50 in the pad 14 by reducing or eliminating porosity on one surface. The degree of penetration of the droplets determines the gradient in the pore volume 50 and may result in a solid mixture of superelastic metal and the sprayed metal at one surface. By way of example, plasma spraying may result in a completely sealed (e.g., solid) side of the pad 14. More than one layer of superelastic metal having varying degrees of porosity may be bonded together to build a gradient of porosity in the bonding portion 44. It should be recognized that there may be other methods to create a gradient in a porous pad. As an alternative, a sheet of metal may be tack welded to one side of the bonding portion 44 to provide a platform by which the bonding portion 44 is attached to the bracket body 12.

Once fabricated as described herein, the pad 14 may then be attached to the bracket body 12, as shown in Fig. 1. This may be accomplished, for example, by laser bonding the pad 14 to the bracket body 12 or by another metal joining or welding process.

With reference to Fig. 5, in one embodiment, the clinician may add adhesive 56 to the pad 14 or the pad 14 may be prefilled with the adhesive 56 and packaged as a ready-to-use kit. In one embodiment, the bonding portion 44 may be designed with a target volume of porosity. A targeted volume of adhesive may be injected into that volume of porosity. This may occur at the manufacturing facility in which case the bracket 10 with preloaded adhesive is packaged for distribution. The adhesive 56 may be an unpolymerized orthodontic adhesive partially or fully absorbed by the porous structure 48. This prepackaged orthodontic bracket may be offered as the packaged product for a clinician to employ at the time of bonding and therefore may eliminate the tedious intermediate step of manually applying bulk adhesive prior to adhering the bracket 10 to the tooth. Advantageously, the prepackaged product provides a tremendous time savings in the office and enables greater bond consistency across the dentition.

Whether the adhesive 56 is added manually by the clinician or is injected into the porous structure 48 prior to packaging, the amount of adhesive 56 may be sufficient to essentially fill all of or only a portion of the pore volume 50 of the pad 14. The superelastic metal may be hydrophilic and so advantageously promote the penetration of the adhesive 56 into the pore volume 50 of the bonding portion 44. The adhesive 56 may be photopolymerizable or another polymerizable compound known in the art.

In this regard, the composition contains a photoinitiator that upon irradiation with actinic radiation initiates the polymerization (or hardening) of the composition. Such photopolymerizable compositions can be free-radically polymerizable or cationically polymerizable. Suitable photopolymerizable components that can be used in the compositions as disclosed herein include, for example, epoxy resins (which contain cationically active epoxy groups), vinyl ether resins (which contain cationically active vinyl ether groups), ethylenically unsaturated compounds (which contain free-radically active unsaturated groups, e.g., acrylates and methacrylates), and combinations thereof. Also suitable are polymerizable materials that contain both a cationically active functional group and a free-radically active functional group in a single compound. Examples include epoxy-functional acrylates, epoxy-functional methacrylates, and combinations thereof.

In one embodiment, the porous structure 48 acts as a sponge to hold preloaded adhesive in a targeted location. During installation, the clinician may press the bracket 10 against the tooth. This slight manual pressure on the pad 14 may cause the porous structure 48 to elastically compress. During that compression, a thickness of the porous structure 48 is reduced. This may temporarily reduce the pore volume 50 and cause extrusion of the adhesive 56 from the bonding portion 44. The adhesive 56 may extend outwardly from the pad 14, as is shown in Fig. 5, in a controlled manner. When the pressure is released, the porous structure 48 may elastically recover at least a portion of its original dimensions during which any excess adhesive 56 may be reabsorbed. This may minimize the need for post-bonding cleanup. Once extruded, the adhesive 56 may be polymerized by standard methods (e.g., photo-initiation).

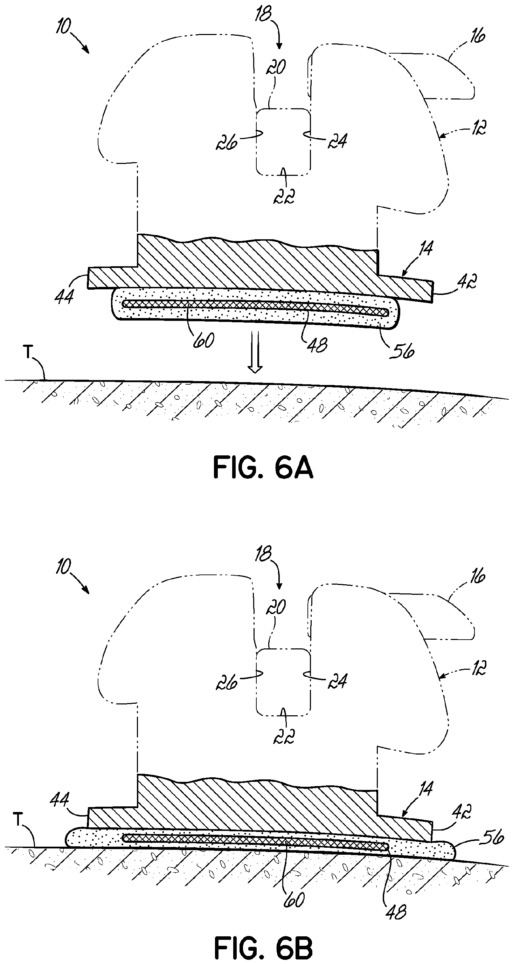

In one embodiment, and with reference to Figs. 6A and 6B, a porous wafer 60 of superelastic metal (e.g., NiTi) of controlled thickness and porosity may be embedded into the adhesive 56 which is positioned on the pad 14. The wafer 60 may include the porous structure 48 similar to that described above. The adhesive 56 may be preloaded at the manufacturer's facility rather than being manually dispensed by the clinician and may fill the pore volume 50. With reference to Fig. 6A, the porous wafer 60 may act as a structural or functional element in the preloaded adhesive 56. The wafer 60 may retain the adhesive 56 in contact with the pad prior to polymerization. As shown, the adhesive 56 may encapsulate the porous wafer 60. The adhesive 56 may wet the porous wafer 60 and so may be less likely to run off the pad 14 prior to installation. The porous wafer 60 may hold a low viscosity adhesive in position on the pad 14 during shipment and prior to polymerization. During installation, the porous wafer 60 may facilitate uniform spreading of the adhesive 56 between the bracket 10 and the tooth T.

With reference now to Fig. 6B, once polymerized, the porous wafer 60 may structurally reinforce the adhesive 56. Structural reinforcement may be in addition to any fillers in the adhesive 56 or the wafer 60 may replace the fillers found in conventional adhesives. Once the adhesive polymerizes, the wafer 60 may structurally support the cured adhesive during treatment. The porous wafer 60 may be from about 50 $\mu$m to about 500 $\mu$m in thickness.

With continued reference to Figs. 5 and 6B, once installed at the desired location on a tooth, the adhesive 56 may then be hardened so that the bracket body 12 is bonded to the tooth. Curing may be effected by visible light radiation or other methods known in the art. When the adhesive cures, it is "rooted" in the pad 14. It will be appreciated that the intimate contact between the bonding portion 44 and the adhesive 56 is promoted by a large surface area of contact between the two, that is, between the relatively large surface area provided by the solid volume 52 and the adhesive 56. Having multiple interlocking bonding sites forces the failure mechanism of debonding to break each independent site. It is believed that the crack propagation between the tooth and the pad 14 within the adhesive bond may be blunted due to the additional energy necessary to start new cracks when multiple interlocking bonding sites are encountered.

In another aspect of the present invention, the pad 14 may act as a bioreservoir. In this regard, at least a portion of the pore volume 50 may house additives intended to improve the quality of the bonding of the bracket body 12 to the tooth. In an exemplary embodiment, anti-bacterial, anti-staining (cosmetic), bleaching, and/or re-mineralization agents may be incorporated into a dental sealant or resin. The pad 14 may then be impregnated by filling at least a portion of the pore volume 50 with the sealant (not shown). The bioactive agent may slow-release at an effective rate to an area adjacent the tooth surface. The location of the bioactive agents within the pad 14 may be chosen based on the area(s) adjacent the tooth that are most at risk (i.e., areas that are hygienically hindered).

In order to facilitate a more complete understanding of the embodiments of the invention, the following non-limiting example is provided.

Example 1

A porous NiTi base was bonded to an Ormco Mini-Twin™ bracket. The assembled bracket and pad are shown in Figs. 7A and 7B. The bonding surface of the pad is most clearly shown in Fig. 7B. The bracket was stainless steel (i.e., SS 17-4). The porous NiTi pad from PorOsteon was a generally rectangular block or sheet and included a layer of 316 SS sprayed via a plasma spray system. Individual pads were machined (i.e., via EDM) from the sheet. The porous NiTi pad was gold brazed to the bracket body, specifically to the layer of 316 SS, at 1,950 °F.

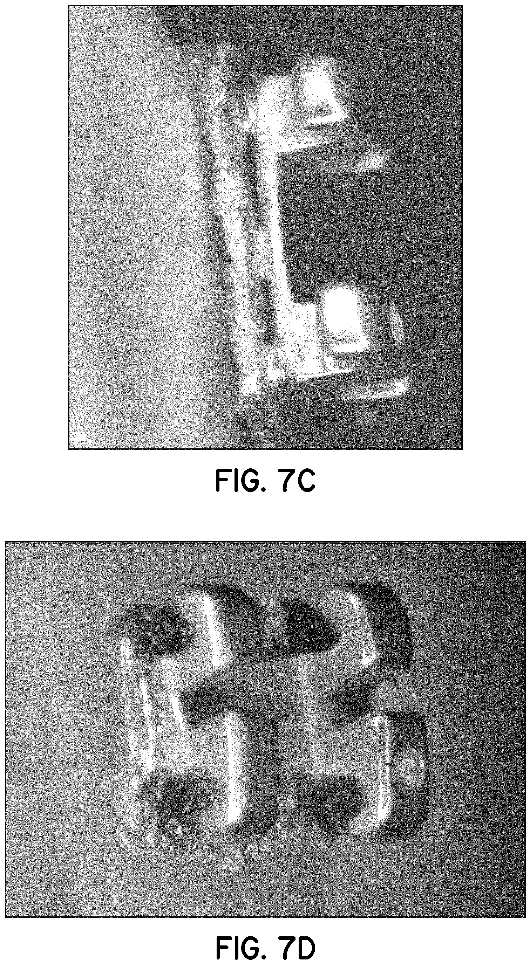

The bracket including the porous NiTi pad was adhered to tooth enamel with a standard Ormco adhesive between a tooth and the pad. The bracket bonded to the tooth is shown in Figs. 7C and 7D. The porous NiTi base bonded well to the enamel using standard clinical procedures. In shear bonding tests, the bracket debonded from the tooth enamel at about 5 kgf. Debonding occurred between the enamel and the pad and not between the pad and the bracket. It was concluded that the bonding between the porous NiTi pad and the tooth enamel was successful and demonstrated orthodontic applicability.

While the present invention has been illustrated by a description of various embodiments and while these embodiments have been described in some detail, it is not the intention of the inventors to restrict or in any way limit the scope of the appended claims to such detail. Thus, additional advantages and modifications will readily appear to those of ordinary skill in the art. The various features of the invention may be used alone or in any combination depending on the needs and preferences of the user.

**Claims**

1. A pad of an orthodontic bracket comprising:

   a porous superelastic metal structure that is configured to receive an adhesive for bonding the orthodontic bracket to a tooth.

2. The pad of claim 1, wherein the porous superelastic metal structure is a wafer and is impregnated with the adhesive prior to bonding the orthodontic bracket to the tooth.

3. The pad of claim 1 or 2, wherein the orthodontic bracket includes a bracket body and wherein the porous superelastic metal structure forms a bonding portion that is coupled to the bracket body and defines a bonding surface that receives the adhesive.

4. The pad of claim 3, wherein the porous superelastic metal structure defines a pore volume that is substantially uniformly distributed through the thickness of the bonding portion; and/or
   wherein the bracket body and the porous superelastic metal structure are integrally formed.

5. The pad of claim 3, wherein the porous superelastic metal structure defines a pore volume in which a volume fraction of porosity at a location proximate the bracket body is different from a volume fraction of porosity at a location proximate the bonding surface; and/or
   wherein the bracket body and the porous superelastic metal structure are integrally formed.

6. The pad of claim 3, 4, or 5, further including an attachment portion for attaching the bonding portion to the bracket body, wherein the attachment portion is substantially solid.

7. The pad of claim 6, wherein the attachment portion is made of a metal that is different from the metal of the porous superelastic metal structure; and/or
   the attachment portion is made of a metal that differs from the metal of the bracket body.

8. An orthodontic bracket comprising:

   a bracket body, and
   the pad of any of claims 1 to 7.

9. The orthodontic bracket of claim 8, wherein the bracket body and the pad are integrally formed.

10. The orthodontic bracket of claim 8 or 9, wherein the porous superelastic metal structure forms a bonding portion that is coupled to the bracket body and defines a bonding surface that is configured to receive the adhesive.

11. The orthodontic bracket of claim 10, further including an attachment portion for attaching the bonding portion to the bracket body, wherein the attachment portion is substantially solid.

12. A method for making a pad for an orthodontic bracket comprising:

    fabricating a porous superelastic metal structure for placement between the orthodontic bracket and a tooth, the porous superelastic metal structure being configured to receive an adhesive for bonding the porous superelastic metal structure to the tooth.

13. The method of claim 12, wherein the orthodontic bracket includes a bracket body and the porous superelastic metal structure forms a bonding portion, the method further including:

    fabricating an attachment portion that is to be coupled to the bonding portion and to the bracket body.

14. The method of claim 13, wherein fabricating the attachment portion includes closing off porosity on one side of the bonding portion by spraying molten metal or tack welding a sheet of metal to one side of the bonding portion.

15. The method of claim 12, 13, or 14, wherein fabricating includes:

    mixing a nickel-containing powder and a titanium-containing powder,
    pressing the powder mixture to form a green body, and
    igniting a reaction between the nickel-containing powder and the titanium-containing powder in the green body; and/or
    mixing a powder of a superelastic metal and a powder of a polymeric binder, placing the mixture in a polymeric precursor foam, and sintering the superelastic metal particles; and/or
    vapor depositing a superelastic metal on a prefabricated carbon skeleton; and/or
    melting a composition from which the superelastic metal forms upon cooling, mixing a filler material in the melted composition, pouring the mixture of melted metal and filler into a mold, cooling the mixture, and removing the filler.

**Patentansprüche**

1. Pad einer orthodontischen Klammer, umfassend:

    eine poröse superelastische Metallstruktur, die zur Aufnahme eines Klebstoffs zum Verkleben der orthodontischen Klammer an einem Zahn gestaltet ist.

2. Pad nach Anspruch 1, wobei die poröse superelastische Metallstruktur eine Scheibe ist und vor dem Verkleben des orthodontischen Klammer am Zahn mit dem Klebstoff getränkt wird.

3. Pad nach Anspruch 1 oder 2, wobei das orthodontische Klammer einen Klammerkörper enthält und wobei die poröse superelastische Metallstruktur einen Klebeteil bildet, der mit dem Klammerkörper gekoppelt ist und eine Klebefläche definiert, die den Klebstoff aufnimmt.

4. Pad nach Anspruch 3, wobei die poröse superelastische Metallstruktur ein Porenvolumen definiert, das im Wesentlichen gleichmäßig durch die Dicke des Klebeteils verteilt ist; und/oder
   wobei der Klammerkörper und die poröse superelastische Metallstruktur einstückig ausgebildet sind.

5. Pad nach Anspruch 3, wobei die poröse superelastische Metallstruktur ein Porenvolumen definiert, bei dem ein Volumenanteil der Porosität an einer Stelle nahe dem Klammerkörper von einem Volumenanteil der Porosität an einer Stelle nahe der Klebefläche verschieden ist; und/oder
   wobei der Klammerkörper und die poröse superelastische Metallstruktur einstückig ausgebildet sind.

6. Pad nach Anspruch 3, 4 oder 5, der ferner einen Anbringungsteil zum Anbringen des Klebeteils am Klammerkörper enthält, wobei der Anbringungsteil im Wesentlichen fest ist.

7. Pad nach Anspruch 6, wobei der Anbringungsteil aus einem Metall hergestellt ist, das von dem Metall der porösen superelastischen Metallstruktur verschieden ist; und/oder
   der Anbringungsteil aus einem Metall hergestellt ist, das vom Metall des Klammerkörpers verschieden ist.

8. Orthodontische Klammer, umfassend:

    einen Klammerkörper und
    den Pad nach einem der Ansprüche 1 bis 7.

9. Orthodontische Klammer nach Anspruch 8, wobei der Klammerkörper und der Pad einstückig ausgebildet sind.

10. Orthodontische Klammer nach Anspruch 8 oder 9, wobei die poröse superelastische Metallstruktur einen Klebeteil bildet, der mit dem Klammerkörper gekoppelt ist und eine Klebefläche definiert, die zur Aufnahme des Klebstoffs gestaltet ist.

11. Orthodontische Klammer nach Anspruch 10, das ferner einen Anbringungsteil zum Anbringen des Klebeteils am Klammerkörper enthält, wobei der Anbringungsteil im Wesentlichen fest ist.

12. Verfahren zur Herstellung eines Pads für eine orthodontische Klammer, umfassend:

    Anfertigen einer porösen superelastischen Metallstruktur zur Positionierung zwischen dem orthodontischen Klammer und einem Zahn, wobei die poröse superelastische Metallstruktur zur Aufnahme eines Klebstoffs zum Verkleben der porösen superelastischen Metallstruktur an dem Zahn gestaltet ist.

13. Verfahren nach Anspruch 12, wobei das orthodontische Klammer einen Klammerkörper enthält und die poröse superelastische Metallstruktur einen Klebeteil bildet, wobei das Verfahren ferner Folgendes enthält:

Anfertigen eines Anbringungsteils, der mit dem Klebeteil und dem Klammerkörper zu koppeln ist.

14. Verfahren nach Anspruch 13, wobei das Anfertigen des Anbringungsteils das Verschließen von Porosität auf einer Seite des Klebeteils durch Aufsprühen von geschmolzenem Metall oder durch Heftschweißen eines flächigen Metallstücks an eine Seite des Klebeteils enthält.

15. Verfahren nach Anspruch 12, 13 oder 14, wobei das Anfertigen Folgendes enthält:

Mischen eines nickelhaltigen Pulvers und eines titanhaltigen Pulvers,
Verpressen des Pulvergemischs zum Bilden eines Grünkörpers und
Entfachen einer Reaktion zwischen dem nickelhaltigen Pulver und dem titanhaltigen Pulver in dem Grünkörper und/oder
Mischen eines Pulvers eines superelastischen Metalls und eines Pulvers eines polymeren Binders, Geben des Gemischs in einen polymeren Vorläuferschaum und Sintern der superelastischen Metallteilchen und/oder
Dampfabscheiden eines superelastischen Metalls auf ein vorgefertigtes Kohlenstoffskelett und/oder
Schmelzen einer Zusammensetzung, aus der sich beim Kühlen das superelastische Metall bildet, Mischen eines Füllstoffs in der geschmolzenen Zusammensetzung, Gießen des Gemischs aus geschmolzenem Metall und Füller in eine Form, Abkühlen des Gemischs und Entfernen des Füllers.

**Revendications**

1. Tampon de boîtier orthodontique comprenant :

une structure métallique super-élastique poreuse configurée pour recevoir un adhésif destiné à coller le boîtier orthodontique à une dent.

2. Tampon selon la revendication 1, dans lequel la structure métallique super-élastique poreuse est une plaquette et est imprégnée avec l'adhésif avant le collage du boîtier orthodontique à la dent.

3. Tampon selon la revendication 1 ou 2, dans lequel le boîtier orthodontique comporte un corps de boîtier et dans lequel la structure métallique super-élastique poreuse forme une partie de collage qui est couplée au corps de boîtier et définit une surface de collage qui reçoit adhésif.

4. Tampon selon la revendication 3, dans lequel la structure métallique super-élastique poreuse définit un volume de pores qui est distribué sensiblement uniformément à travers l'épaisseur de la partie de collage ; et/ou
dans lequel le corps de boîtier et la structure métallique super-élastique poreuse forment un tout.

5. Tampon selon la revendication 3, dans lequel la structure métallique super-élastique poreuse définit un volume de pores dans lequel une fraction volumique de porosité à un emplacement proche du corps de boîtier est différente d'une fraction volumique de porosité à un emplacement proche de la surface de collage ; et/ou
dans lequel le corps de boîtier et la structure métallique super-élastique poreuse forment un tout.

6. Tampon selon la revendication 3, 4, ou 5, comportant en outre une partie de fixation pour fixer la partie de collage au corps de boîtier, dans lequel la partie de fixation est sensiblement solide.

7. Tampon selon la revendication 6, dans lequel la partie de fixation est réalisée dans un métal qui est différent du métal de la structure métallique super-élastique poreuse ; et/ou la partie de fixation est réalisée dans un métal qui diffère du métal du corps de boîtier.

8. Boîtier orthodontique comprenant :

un corps de boîtier, et
le tampon selon l'une quelconque des revendications 1 à 7.

9. Boîtier orthodontique selon la revendication 8, dans lequel le corps de boîtier et le tampon forment un tout.

10. Boîtier orthodontique selon la revendication 8 ou 9, dans lequel la structure métallique super-élastique poreuse forme une partie de collage qui est couplée au corps de boîtier et définit une surface de collage configurée pour recevoir adhésif.

11. Boîtier orthodontique selon la revendication 10 comportant en outre une partie de fixation pour fixer la partie de collage au corps de boîtier, dans lequel la partie de fixation est sensiblement solide.

12. Procédé de réalisation d'un tampon pour boîtier orthodontique comprenant :

la fabrication d'une structure métallique superélastique poreuse destinée à être placée entre le boîtier orthodontique et une dent, la structure métallique super-élastique poreuse étant configurée pour recevoir un adhésif destiné à coller la structure métallique super-élastique poreuse à la dent.

13. Procédé selon la revendication 12, dans lequel le boîtier orthodontique comporte un corps de boîtier et la structure métallique super-élastique poreuse forme une partie de collage, le procédé comportant en outre :

la fabrication d'une partie de fixation destinée à être couplée à la partie de collage et au corps de boîtier.

14. Procédé selon la revendication 13, dans lequel la fabrication de la partie de fixation comporte l'obturation de la porosité sur un côté de la partie de collage en pulvérisant un métal fondu ou en soudant par points une feuille de métal sur un coté de la partie de collage.

15. Procédé selon la revendication 12, 13, or 14, dans lequel la fabrication comporte :

le mélange d'une poudre à teneur en nickel et d'une poudre à teneur en titane,
la pression du mélange de poudres pour former un corps vert, et
le déclenchement d'une réaction entre la poudre à teneur en nickel et la poudre à teneur en titane dans le corps vert ; et/ou
le mélange d'une poudre d'un métal super-élastique et d'une poudre d'un liant polymère, le placement du mélange dans une mousse précurseur polymère, et le frittage des particules métalliques super-élastiques ; et/ou
le dépôt en phase vapeur d'un métal super-élastique sur un squelette de carbone préfabriqué ; et/ou
la fonte d'une composition à partir de laquelle le métal super-élastique se forme au refroidissement, le mélange d'un matériau de charge dans la composition fondue, le coulage du mélange de métal fondu et de charge dans un moule, le refroidissement du mélange et le retrait de la charge.

FIG. 1

FIG. 3

**FIG. 2**

**FIG. 2A**

**FIG. 2B**

FIG. 4

FIG. 5

FIG. 6A

FIG. 6B

FIG. 7A

FIG. 7B

FIG. 7C

FIG. 7D

**EP 3 146 934 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 1219476 A1
- US 8585398 B
- US 201400272758 A